# EUROPEAN PATENT APPLICATION

(11) **EP 2 395 247 A1**
(43) Date of publication of application: **14.12.2011**
(21) Application number: 11167297.8
(22) Date of filing: 24.05.2011
(51) Int. Cl.: F16B 1/00, F16B 13/12, F16B 13/06, B23B 51/08, B25B 31/00

(54) **Drop-in anchor and drop-in anchor systems**

(30) Priority: 10.06.2010 US 813086; 10.06.2010 US 813109; 10.06.2010 US 813167; 10.06.2010 US 813150; 10.06.2010 US 813128
(71) Applicant: Powers Products III, LLC, Brewster, NY 10509 (US)
(72) Inventor: Armiento, Alan, New Rochelle, NY 10801 (US); Bland, TJ, White Plains, NY 10605 (US); La Barbera, Robert, New Rochelle, NY 70801 (US); Olsen, Jacob, Roselle, IL 60172 (US)
(74) Representative: Baldwin, Mark

(57) **Abstract**

A drop-in anchor comprises a tubular sleeve (12) having a first end (24) and an expandable second end (14). The sleeve has an internal taper narrowing in a direction from the first end to the second end at a sleeve taper angle (30). The drop-in anchor further comprises a plug (26) insertable in the sleeve such that when the plug is driven into an installed position in the sleeve an external surface thereof engages said internal taper to expand the second end (14). The plug: i) is a cylindrical body having substantially zero taper; or ii) the external surface tapers at a plug taper angle (36) that is different to said sleeve angle (30) such that there is a difference between the sleeve taper angle and the plug taper angle of at least about one degree.

## Description

### BACKGROUND

The invention relates to drop-in anchor systems and drop-in anchors.

Drop-in anchors for use in, for example, fastening items to masonry, typically include a sleeve, which is placed in a pre-drilled hole. A plug is driven into an expandable portion of the sleeve which, when expanded, secures the sleeve in the hole. Items may be secured to the masonry via a threaded end of the sleeve opposite the expandable portion of the sleeve.

In typical drop-in anchors, the plug is frusto-conically shaped thereby providing an outer surface matching an inwardly tapering inner wall of the sleeve. This has always been, understandably thought to be the most efficient configuration for a drop-in anchor as the angled surfaces have been understood to work with each other to gamer the desired effect while using the angle to make insertion as easy as it can be. Nevertheless, drop-in anchors of the prior art require substantial setting force, normally obtained by the application of a relatively large number of blows with a heavy duty hammer.

### SUMMARY

The invention provides a drop-in anchor comprising:
a tubular sleeve having a first end and an expandable second end, the sleeve having an internal taper narrowing in a direction from the first end to the second end at a sleeve taper angle; and
a plug insertable in the sleeve such that when the plug is driven into an installed position in the sleeve an external surface thereof engages said internal taper to expand the second end,
wherein the plug:
   i) is a cylindrical body having substantially zero taper; or
   ii) said external surface tapers at a plug taper angle that is different to the sleeve taper angle such that there is a difference between the sleeve taper angle and the plug taper angle of at least about one degree.

The invention includes a drop-in anchor comprising:
a tubular sleeve having a first end and an expandable second end, the sleeve including one or more raised surfaces at the first end; and a plug insertable in the sleeve such that when the plug is driven into an installed position in the sleeve the second end expands and an installation tool interacts with the one or more raised surfaces to provide a visual indication of engagement of the drop-in anchor to a workpiece.

The invention also includes a method of installing a drop-in anchor in a workpiece comprising:
drilling a hole in the workpiece;
inserting a drop-in anchor into the hole;
driving a plug of the drop-in anchor into an installed position with an installation tool thereby engaging the sleeve with the workpiece;
abrading the installation tool on one or more raised surfaces of a sleeve of the drop in anchor when the plug attains the installed position; and
removing a coating from the one or more raised surfaces via the abrasion of the installation tool thereon, the removal of the coating providing a visual indication to an observer that the sleeve is engaged with the workpiece.

The invention also includes an installation tool for a drop-in anchor comprising:
a drill bit including a first end configured as a drill for forming a hole in a workpiece for a drop-in anchor; and
a tool sleeve securable to the drill bit including a tool pocket at least partially receptive of the drill bit therein and a tool tip configured to drive a plug of a drop-in anchor into an installed position to secure the drop-in anchor in the workpiece.

The invention also includes a method of installing a drop-in anchor in a workpiece comprising:
forming a hole in a workpiece with a first end of a drill bit;
inserting a drop-in anchor into the hole;
securing a tool sleeve to the drill bit, the tool sleeve including:
   a tool pocket at least partially receptive of the first end of the drill bit; and a tool tip; and
   driving a plug of the drop-in anchor into an installed position with the tool tip thereby securing the drop-in anchor to the workpiece.

The invention also includes a retainer for a drop-in anchor comprising a durable, moisture resistant member insertable into a sleeve of a drop-in anchor and configured to be retained in the sleeve by one or more threads disposed in the sleeve to prevent inadvertent removal of a plug from the sleeve.

The invention also includes a drop-in anchor assembly comprising:
a tubular sleeve having a first end including one or more internal threads, and an expandable second end;
a plug insertable in the sleeve such that when the plug is driven into an installed position in the sleeve the second end expands;
a retainer formed of a durable moisture-resistant material insertable in the sleeve behind the plug, the retainer configured to be retained in the sleeve by the one or more threads and prevent inadvertent removal of the plug from the sleeve.

The invention also includes a method of assembling a drop-in anchor comprising: providing a tubular sleeve, the sleeve having a first end including one or more internal threads, and an expandable second end; inserting a plug into the first end of the tubular sleeve;
inserting a durable, moisture-resistant retainer into the first end behind the plug; and engaging an outer periphery of the retainer with the threads to prevent inadvertent removal of the plug from the sleeve.

### BRIEF DESCRIPTION OF THE DRAWINGS

In order that the invention may be well understood, some embodiments thereof, which are given by way of example only will now be described with reference to the drawings in which:
FIG. 1 is a cross-sectional view of an embodiment of a drop-in anchor;
FIG. 2 is a cross-sectional view of an embodiment of a drop-in anchor with the plug in an installed position;
FIG. 3 is a cross-sectional view of an embodiment of a drop-in anchor including a retainer;
FIG. 4 is a cross-sectional view of another embodiment of a drop-in anchor including a retainer;
FIG. 5 is a plan view of an embodiment of a retainer;
FIG. 6 is a cross-sectional view of an embodiment of an installation tool;
FIG. 7 is a cross-sectional view of an embodiment of an installation tool configured for drilling;
FIG. 8 is a cross-sectional view of an embodiment of an installation tool configured to drive a plug; and
FIG. 9 is a cross-sectional view of another embodiment of a drop-in anchor.

### DETAILED DESCRIPTION

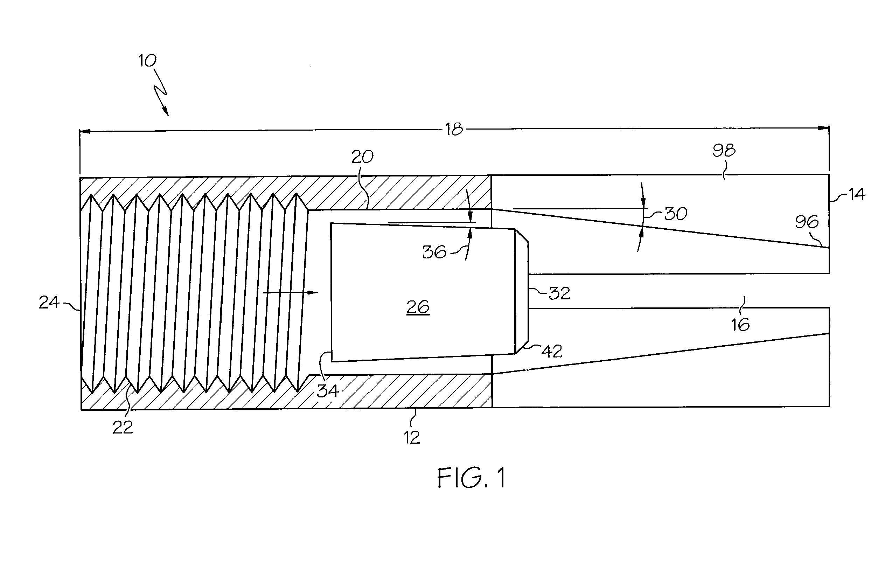

FIG. 1 illustrates a drop-in anchor 10. The anchor 10 includes a sleeve 12. The sleeve 12 is substantially tubular and is radially expandable at an expansion end 14. To achieve the expandability, the sleeve 12 includes one or more expansion openings 16 or other similar structure allowing diametric increase of the sleeve at the expansion end 14 extending from the expansion end partially along a length 18 of the sleeve 12. An inner wall 20 in one embodiment of the sleeve 12 includes threads 22 at a threaded end 24 opposite the expansion end 14 to receive a threaded fastener (not shown) to secure desired items to the anchor 10 once the anchor is installed in, for example, concrete masonry. It is to be understood that although it is common for drop-in type anchors to be provided with internal threads (i.e. threads on an inside surface of the sleeve 12 as shown in FIG. 1), it is also possible to place the threads 22 on an outside surface of the sleeve 12. If the threads 22 are provided as external threads, the sleeve 12 should be configured to extend beyond the surface of the masonry (proud of the surface of the masonry) when installed.

The anchor 10 includes a plug 26, which is insertable into the sleeve 12 from the threaded end 24. In some embodiments, the diameter 28 of the sleeve 12 at the expansion end 14 is such that the plug 26 is only insertable in the sleeve 12 from the threaded end. The inner diameter of the sleeve tapers in an expansion portion 98. That is, the inner diameter of the sleeve increases at a sleeve angle 30 in a direction from the expansion end 14 towards the threaded end 24 to define an internal taper 96 so that the plug 26 is in an interference fit with the sleeve 12 in the expansion portion 98. Accordingly, when the plug 26 is driven towards the expansion end 14, the expansion portion 98 expands to secure the sleeve 12 in the concrete masonry. The plug 26 has a leading, or tip end 32 located closest to the expansion end 14 and a head end 34 located closest to the threaded end 24. In some embodiments the plug 26 is a substantially cylindrical body having a substantially constant diameter from the tip end 32 to the head end 34. In other embodiments, the plug 26 has a slight taper at a plug angle 36 in a direction from the head end 34 towards the tip end 32.

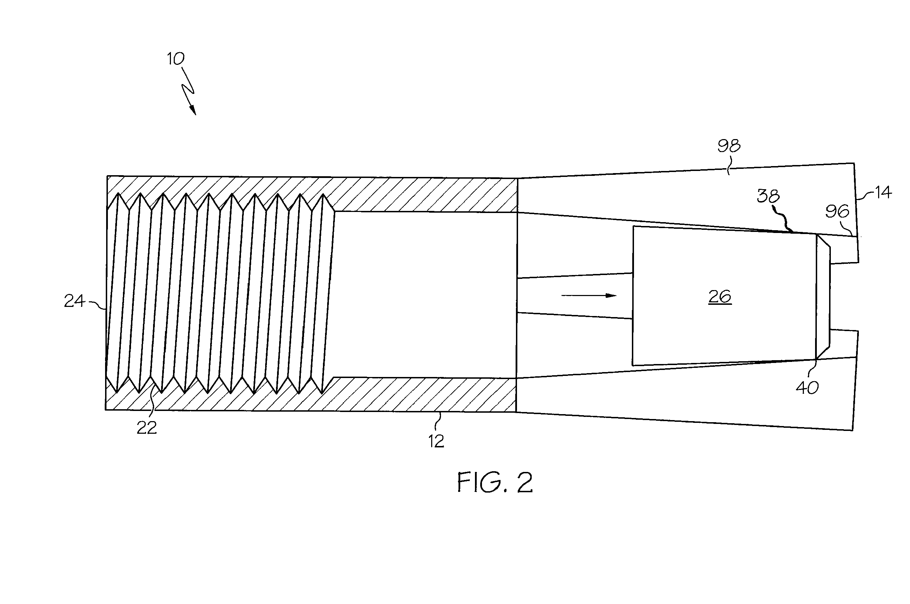

In the embodiments illustrated in FIGS 1 and 2, the plug angle 36 and the sleeve angle 30 are substantially dissimilar, with the sleeve angle 30 being greater than the plug angle 36. The difference is such that a contact area 38 between the plug 26 and the sleeve 12 is reduced compared with that of prior art drop-in anchors. In some embodiments, the contact may be substantially an annular, planar contact. The difference between sleeve angle 30 and the plug angle 36 determines the size of the contact area 38. In some embodiments, the difference between the sleeve angle 30 and the plug angle 36 is about 1 degree or greater, for example 1.5 degrees. This assures a minimal contact area 38 between the sleeve 12 and the plug 26. Reduction of the contact area 38 reduces friction between the sleeve 12 and the plug 26 thereby reducing the amount of force required to set the plug 26 in an installed position 40 shown in FIG. 2. Once the plug 26 is driven to the installed position 40, however, the difference between the sleeve angle 30 and the plug angle 36 is substantially zero where they contact due to the deformation of the expansion portion 98. In some embodiments, the tapered portion of the plug 26 is located at or adjacent the relatively narrow end of the internal taper 96 when in the installed position 40 so as not to limit full expansion of the sleeve 12 when the plug 26 is driven to the installed position 40.

In some embodiments, the friction may be reduced sufficiently to allow the plug 26 to be driven into the installed position 40 by a number of blows with a s standard 16 or 20 ounce hammer that is substantially fewer than is necessary for prior art drop-in anchors. Moreover, in some embodiments, a conventional rotary hammer drill (not shown) may be employed to successfully set the drop-in anchor without the use of any other driving means. It is to be appreciated, however, that any suitable setting tool may be utilised. Embodiments of the drop-in anchor 10 may include those with a sleeve having an outside diameter between about 1/4" and 3/4" (approximately 6.35 and 19.05mm). Further, because of the lack of taper in the plug or the difference between the taper sleeve and plug angles 30, 36, when the plug 26 is driven toward the expansion end 14 the plug 26 deforms the material of the expansion portion 98 directly radially outwardly in contrast to prior art tapered plugs 26 in which the sleeve material bends around the taper of the plug. This results in an expanded sleeve 12 which has a substantially linear outer surface of the expansion portion 98. This linear outer surface sleeve 12 increases ultimate loads which the drop-in anchor 10 is capable of withstanding, when compared to a prior art anchor having a tapered plug of similar maximum diameter.

Referring again to FIG. 1, the tip end 32 of the plug 26 may include a chamfer 42. The chamfer 42 is included to encourage the plug 26 to move into the installed position 40 more easily by preventing the plug 26 from snagging on the inner wall 20 of the sleeve 12 when driven. The chamfer 42 is small so no expansion is lost due to the reduction in diameter of the plug 26 due to the presence of the chamfer 42. Further, in some embodiments, the plug 26 is driven into the installed position 40 such that chamfer 42 is located at the end 96 to preserve maximum expansion of the sleeve 12.

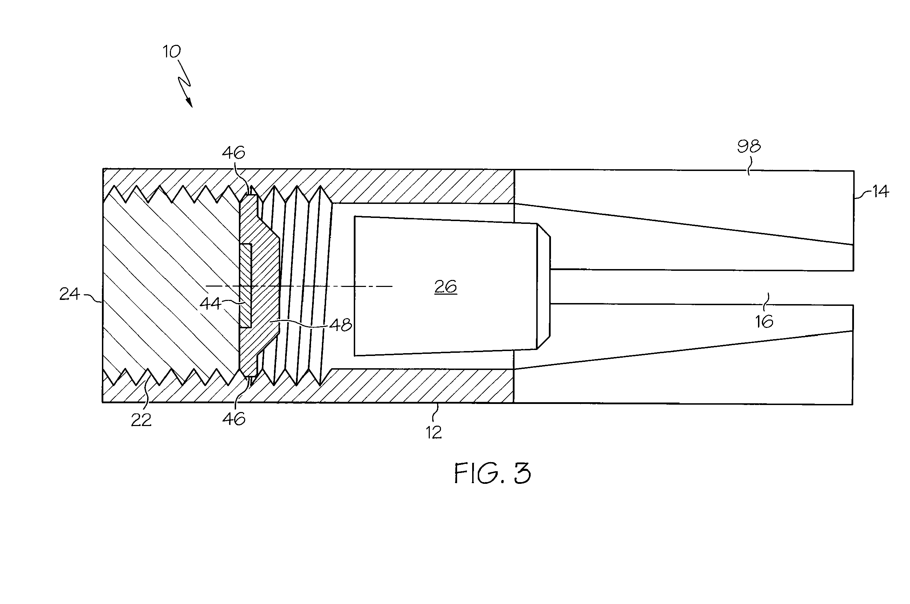

Referring now to FIG. 3, some embodiments include a retainer 44. The retainer 44 is inserted into the sleeve 12 from the threaded end 24 after the plug 26 is inserted. The retainer 44 prevents the plug 26 from inadvertently being removed from the sleeve 12 before the plug 26 is driven to set the drop-in anchor 10. Since the plug 26 is loosely housed in the sleeve 12, it is common for the plug 26 to fall out of the sleeve 12 either in shipping, storage, or just prior to deployment. This is at least a nuisance and can impact efficiency or success at a job site if the plug 26 is not easily found. The retainer 44 is positioned within the sleeve 12 so that exit of the plug 26 is prevented and may in some instances be urged into the sleeve 12 to a depth therein that prevents or impedes movement of the plug 26 to any appreciable degree. Limitation of movement of the plug 26 as such has the added benefit of reducing noise associated with jostling of the sleeve 12 and plug 26.

The retainer 44 is formed from a relatively durable material that includes at least a property of moisture resistance. In one embodiment the material is a plastic material, for example, polyethylene, although metal, wood, rubber or other suitable materials may be substituted. The retainer 44 is moulded or otherwise formed, such as for example stamped, punched, extruded or cut. In some embodiments, the retainer 44 is substantially disc-shaped while in other embodiments other shapes such as part spherical, square, triangular, pentagonal or lenticular. can be substituted without departure from the scope of the disclosure hereof. Ultimately any shape capable of being positioned relative to the sleeve 12 and plug 26 such as to prevent or substantially deter plug 26 exit from the sleeve 12 can be used. As shown in FIG. 3, the retainer 44 is configured such that an outer periphery 46 of the retainer 44 engages the threads 22 of the sleeve 12 when the retainer 44 is inserted into the sleeve 12. It is to be appreciated, however, that in other embodiments the periphery 46 of the retainer 44 may frictionally engage a thread 22 crest to secure the retainer 44 in the sleeve 12.

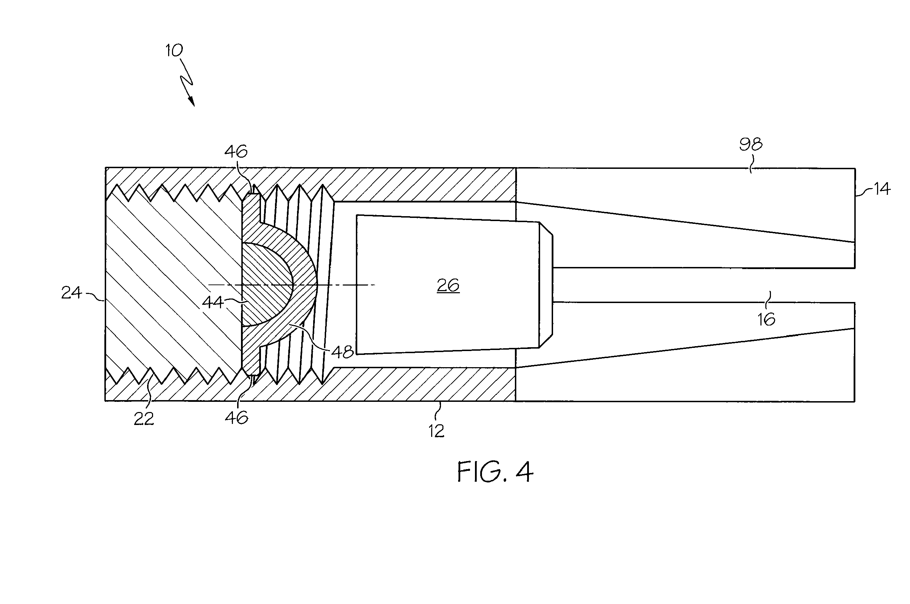

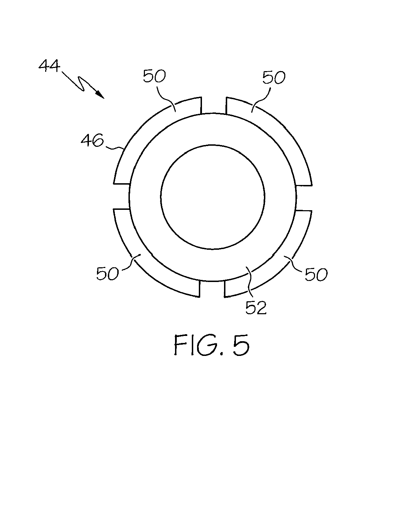

Some embodiments of the retainer 44 include a protrusion 48 extending out of a plane defined by the periphery 46 of the retainer 44. In some embodiments the protrusion is located substantially at the centre of the retainer 44. As shown, the protrusion 48 may be frusto-conically shaped. In other embodiments the protrusion 48 may have other shapes. For example, as shown in FIG. 4 the protrusion 48 may be at least part spherical. Referring to FIG. 5, in some embodiments the retainer 44 includes one or more fingers 50 extending outwardly from a centre portion 52 of the retainer 44. In the embodiment of FIG. 5, the retainer 44 includes four fingers 50 equally spaced around the retainer 44. It is to be appreciated that in other embodiments, other quantities of fingers 50 may be included, for example, three, six or eight fingers 50. The fingers 50 make the outer periphery 46 of the retainer 44 more pliable allowing for surer engagement of the retainer 44 to the helical threads 22 of the sleeve 12. In addition, because the structure of the fingers 50 necessarily forms a break in the material, the crossing of threads 22 of the sleeve 12 by the retainer 44 is not required. Rather, the fingers 50 can each fully engage in a thread 22 trough without extending over a thread 22 crest. The fingers 50 further decrease the amount of force necessary to set the plug 26 with the retainer 44 installed as compared with a retainer 44 without fingers 50. It will be appreciated that a single break in the periphery 46 of the retainer 44 will also achieve the result of full engagement and avoidance of thread 22 crest crossing.

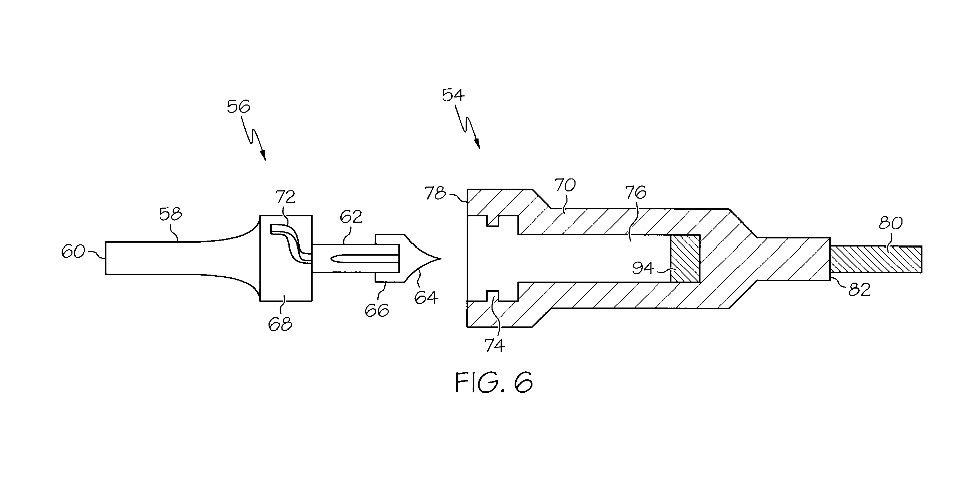

Referring now to FIG. 6, some embodiments of the drop-in anchor 10 are configured to be installed by a unique installation tool 54. The installation tool 54 includes a drill bit 56. The drill bit 56 includes a shaft 58 disposed at a connection end 60, which is configured to be installed in a chuck (not shown) of, for example, a conventional rotary hammer drill (not shown). A drill end 62 is configured as a drill, with a pointed tip 64 and flutes 66. A bit collar 68 is located between the drill end 62 and the connection end 60. The installation tool 54 includes a tool sleeve 70 which is securable over the drill bit 56 and includes a tool pocket 76 at a first end 78 of the tool sleeve 70. The tool pocket 76 is a substantially tubular, and in some embodiments, cylindrical structure into which the drill bit 56 is insertable and securable. To secure the tool sleeve 70 to the drill bit 56, some embodiments include one or more elements at the bit collar 68, for example, one or more slots 72 which are engageable with one or more protrusions 74 (pins, bars, etc.) of the tool sleeve 70 extending inwardly into the tool pocket 76. The one or more slots 72 may be of any shape along their length so as promote retention of the one or more protrusions 74 therein. For example, the slots 72 may be j-shaped, z-shaped or s-shaped. In some embodiments, the protrusion and slot arrangement may be substantially reversed, with the protrusions 74 extending outwardly from the bit collar 68 and receivable in a slot 72 disposed in the tool sleeve 70. While one slot 72 is shown, it is to be appreciated that other quantities of slots 72 and protrusions 74, for example, two, three or more slots 72 and protrusions 74 may be used. Further, some embodiments include a biasing member 94 located in the tool pocket 76 to bias the drill bit 56 away from the tool sleeve 70 to aid in securing the protrusions 74 in the slots 72. The biasing member 94 shown is a block of resilient material, for example, rubber. It is to be appreciated that other types of biasing members 94, for example, a spring located in the tool pocket 76 may be used. While a protrusion and slot connection arrangement between the tool sleeve 70 and the drill bit 56 is described herein, it is merely an example and other connection arrangements may be used. The tool sleeve 70 includes a setting tool tip 80 located at a second end 82 of the tool sleeve 70. The tool tip 80 is used to drive the plug 26 into the installed position 40 thus expanding the sleeve 12.

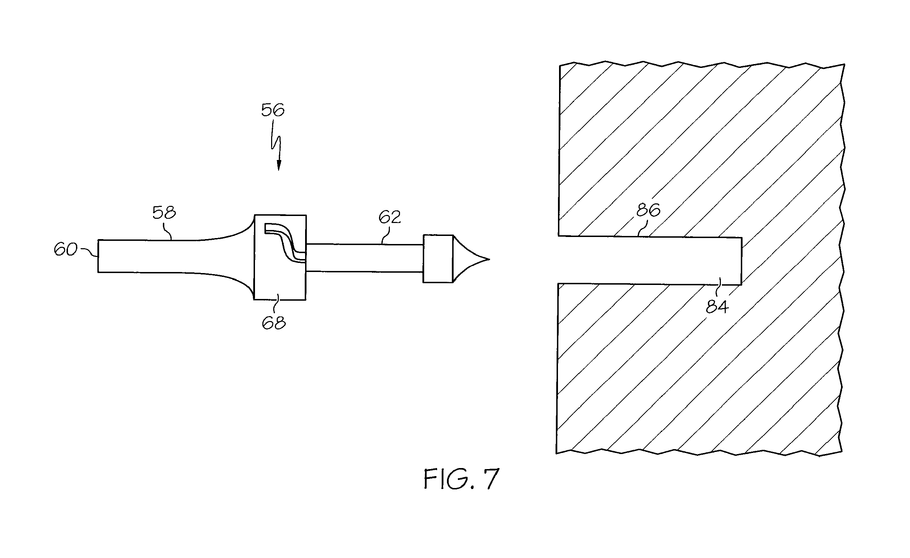

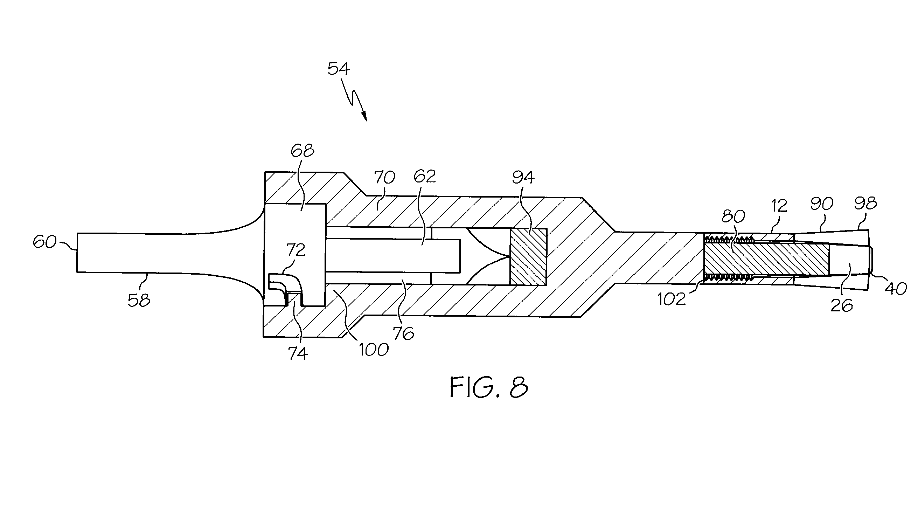

The installation tool 54 is utilised to install a drop-in anchor 10 as shown in FIGS. 7 and 8. Initially, the shaft 58 is installed into and secured in a drill chuck (not shown). The drill bit 56 is then utilised to drill a hole 84 sized to receive the drop-in anchor 10.

Once the drop-in anchor 10 is inserted into the hole 84, the plug 26 must be driven into the installed position 40 (FIG. 2) to cause the sleeve to expand and engage a wall 86 of the hole 84. To achieve this the tool sleeve 70 is installed over the drill bit 56 by inserting the drill bit 56 into the tool pocket 76 and inserting the protrusions 74 into the slots 72 to secure the tool sleeve 70 over the drill bit 56. In some embodiments, when the protrusions 74 are engaged in the slots 72, the bit collar 68 seats on a tool sleeve flange 100. The plug 26 is driven into the installed position 40 by utilising the installation tool 54 in this configuration via the tool tip 80. To drive the plug 26 into the installed position 40, force is transferred through the drill bit 56 into the tool sleeve via the collar 70 and tool sleeve flange 100 to the tool tip 80 which acts on the plug 26. The installation tool 54 requires only installing the installation tool 54 into the chuck a single time during the installation process. The hole 84 can be drilled by the drill bit 56 then the drop in anchor 10 installed using the tool sleeve 70 without installing a second tool in the chuck. This provides for a simpler, faster installation process requiring less time for tool changeover between drilling the hole 84 and setting the plug 26.

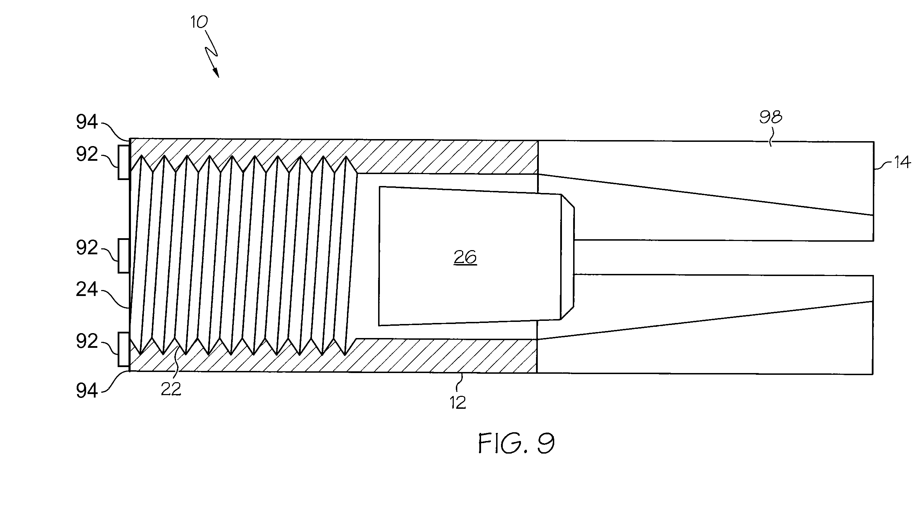

In some embodiments, as shown in FIG. 9, the sleeve 12 includes one or more raised elements, for example, castellations 92 at an exterior of the threaded end 24. FIG. 9 illustrates four castellations 92 equally spaced around the threaded end 24, but it is to be appreciated that other embodiments of the drop-in anchor 10 may utilise other quantities and/or spacing of the castellations 92. The castellations 92 define respective end surface portions at the threaded end 24 that are raised in the lengthways direction of the sleeve relative to the end surface portions 94 disposed between the castellations. It will be appreciated that the raised end surface portions may, alternatively be defined by depressions, slots or slits provided in the threaded end 24.

Prior to driving the plug 26 to the installed position, for example, at manufacture of the sleeve 12, at least a portion of the sleeve 12 including the castellations 92 is coated with a coating having a colour that contrasts with a colour of the base material of the sleeve 12. In some embodiments, the coating is a blue paint. It is to be appreciated, however, that the use of blue paint is merely exemplary, and that other colours of paint and/or other types of coatings may be utilised. When the plug 26 is driven to the installed position, bit tip 80 is of a length such that when the plug 26 attains the installed position 40, a bit shoulder 102 (FIG. 8) is configured to come into contact with the castellations 92. As the bit shoulder 102 rotates relative to the sleeve via action of the rotary hammer drill, or the like, while in contact with the castellations 92, the coating is abraded from the castellations to reveal the sleeve 12 color beneath the coating. Removal of the coating by the bit shoulder 102 serves as a visual indicator that the drop-in anchor 10 is engaged in the masonry. That is, the plug has been inserted far enough into the sleeve to provide a designed interference with the sleeve and, thereby, a designed expansion of the sleeve sufficient to provide a designed interference with the wall of a hole having a diameter corresponding to the hole size(s) the drop-in anchor is designed to be used in. In other embodiments, the visual indicator may be, for example, deformation of the raised elements by the installation tool or a change in color of a coating applied to the raised elements from contact with a reactionary coating on the setting tool, or a heated element on the setting tool, for example.

It is to be understood that the described and illustrated embodiments are purely examples and are not to be taken as limiting, the scope of the invention being limited only by the scope of the claims.

## Claims

1. A drop-in anchor comprising:
a tubular sleeve (12) having a first end (24) and an expandable second end (14), the sleeve having an internal taper narrowing in a direction from the first end to the second end at a sleeve taper angle (30); and
a plug (26) insertable in the sleeve such that when the plug is driven into an installed position in the sleeve an external surface thereof engages said internal taper to expand the second end (14),
wherein the plug:
i) is a cylindrical body having substantially zero taper; or
ii) said external surface tapers at a plug taper angle (36) that is different to said sleeve angle (30) such that there is a difference between the sleeve taper angle and the plug taper angle of at least about one degree.

2. The drop-in anchor of claim 1, wherein the difference between the sleeve taper angle (30) and the plug taper angle (36) is about 1.5 degrees.

3. The drop-in anchor of claim 1 or 2, wherein the plug taper angle (36) is less than the sleeve taper angle (30).

4. The drop-in anchor of any one of the preceding claims, wherein a plug outer diameter at a leading end region thereof is greater than the inner diameter of the sleeve (12) in the region of the second end (14), thereby defining a contact between the sleeve and the plug.

5. The drop-in anchor of claim 4, wherein the contact is substantially an annular contact.

6. The drop-in anchor of any one of the preceding claims, wherein the sleeve (12) includes one or more expansion openings (16) extending from the second end (14) at least partially along a length of the sleeve.

7. The drop-in anchor of any one of the preceding claims, wherein the plug (26) is insertable in the sleeve only at the first end.

8. The drop-in anchor of any one of the preceding claims wherein the sleeve (12) is provided with internal threading (22) at the first end.

9. The drop-in anchor of claim 8, further comprising a moisture resistant member (44) insertable into said sleeve (12) and configured to be retained in the sleeve by engagement with said internal threading (22) to prevent inadvertent removal of said plug from said sleeve.

10. The drop-in anchor of claim 9, configured such that said moisture resistant member (44) is insertable to a retained position in said sleeve (12) at which movement of the plug in a lengthways direction of the sleeve is substantially prevented.

11. The drop-in anchor of any one of the preceding claims, wherein said first end (24) of the sleeve is provided with at least one first end surface portion (92) that is raised in the lengthways direction of the sleeve relative to a second end surface portion (94) of said first end, said at least one first end surface portion being engagable by an installation tool to provide a visual indication that the plug is in said installed position.

12. The drop-in anchor of claim 11, wherein said at least one first end surface portion (92) is provided with a coating that is removable or capable of changing colour in response to engagement by said installation tool to provide said visual indication that the plug is in said installed position.

13. A drop-in anchor system comprising a drop-in anchor as claimed in any one of the preceding claims and an installation tool for said anchor, said installation tool being configured to form a hole in a workpiece to receive the anchor and to drive the plug into said installed position to fix the anchor in said hole.

14. The drop-in anchor system of claim 12, wherein said installation tool comprises a drill bit (56) and a setting tool (54), said setting tool having a pocket (76) to at least partially receive said drill bit and a tip (80) to engage said plug to drive the plug to said installed position.

15. The drop-in anchor system of claim 14, wherein said drill bit (56) and setting tool (54) are provided with a complementary slot and protrusion system operable to releasably secure the drill bit to the setting tool.
